# FASCICULE DE BREVET EUROPEEN

(11) **EP 1 676 776 B1**
(45) Date de publication et mention de la délivrance du brevet: **10.12.2008**
(21) Numéro de dépôt: 04293150.1
(22) Date de dépôt: 28.12.2004
(51) Int. Cl.: B64G 1/22

(54) **Dispositif de support d'éléments d'un équipement spatial, à lames flexibles déployables**
Verbindungsvorrichtung für Elemente einer Raumfahrtausrüstung mit flexiblen ausbringbaren Blättern
Device for supporting elements of a spacecraft equipment with flexible deployable blades

(43) Date de publication de la demande: 05.07.2006
(73) Titulaire: Alcatel Lucent, 75008 Paris (FR)
(72) Inventeur: Dupuis Jean, 06810 Auribeau sur Siagne (FR); Blanchard Laurent Résidence Le Stadium Bât. A, 06370 Mouans-Sartoux (FR); Falzon Frédéric, 06580 Pegomas (FR)
(74) Mandataire: Esselin, Sophie

(56) Documents cités:
- EP-A- 0 509 291
- US-A- 3 474 488
- US-A- 5 003 736

## Description

L'invention concerne les équipements embarqués sur des satellites, et plus particulièrement les dispositifs supportant certains éléments de ces équipements.

On entend ici par « équipement embarqué », tout équipement solidarisé au moins partiellement à au moins un satellite. Il peut notamment s'agir d'un instrument d'observation, destiné à remplir une mission d'observation spatiale et par exemple constitué d'un ou plusieurs télescopes spatiaux, éventuellement répartis sur plusieurs satellites, ou d'au moins une antenne radar, ou bien d'une tuyère plasmique, ou encore d'un capteur.

Par ailleurs, on entend ici par « mission d'observation spatiale » aussi bien les missions destinées à observer la Terre depuis l'espace que les missions destinées à observer une partie de l'univers depuis l'espace.

Afin de remplir des missions d'observation, certains satellites comportent au moins une partie d'un instrument d'observation, comme par exemple un télescope spatial, par exemple de type Cassegrain, Grégory, Korsch, Ritchey-Chrétien, ou Newton.

De tels télescopes comportent au moins un dispositif de support destiné à maintenir un premier élément, tel qu'un miroir (éventuellement de type primaire (et fréquemment appelé collecteur de flux)), éloigné d'une distance choisie d'un second élément, tel qu'un miroir (éventuellement de type secondaire) ou une partie d'un détecteur, implantée au niveau du plan focal où se forment les images. Un tel dispositif constitue avec les éléments qu'il supporte une structure à configuration géométrique fixe. Cette dernière est dimensionnée de manière à supporter les contraintes mécaniques dues à la pesanteur et aux charges (ou forces) subies pendant les différentes phases du lancement, et notamment lors du décollage de la fusée dans laquelle est embarqué le satellite que le dispositif équipe.

Une fois la mission commencée, les charges supportées par la structure sont très faibles, voire quasiment nulles. La structure s'avère donc surdimensionnée pendant toute sa durée de vie opérationnelle, ce qui induit une inertie, notamment transverse, plus importante que celle qui est réellement nécessaire. Cette sur-inertie ne pouvant pas être réduite en orbite, elle limite la vitesse de dépointage du télescope et donc le temps pendant lequel il peut acquérir des images, ce qui est pénalisant notamment lorsqu'il est embarqué sur un satellite dit agile et/ou lorsqu'un mosaïquage doit être effectué (du fait que le champ de l'instrument est inférieur au champ à observer).

En outre, le surdimensionnement de la structure de support se traduit par une masse et un encombrement additionnels qui imposent l'utilisation de fusées de plus grande capacité d'emport et/ou peuvent limiter le nombre de satellites pouvant être lancés par une même fusée.

US5003736 et US3474488 decrivent des dispositifs de support a lames flexibles deployables.

L'invention a donc pour but d'améliorer la situation Elle propose à cet effet un dispositif de support de premier et second éléments d'un équipement spatial (comme par exemple un instrument d'observation), destiné à être embarqué sur au moins un satellite, comprenant au moins deux lames flexibles pouvant être déployées (ou plus simplement déployables ) comprenant chacune une première et une deuxième extrémités respectivement solidarisées aux premier et second éléments et agencées chacune de manière à prendre au moins des positions initiale (repliée par courbures) et finale (dépliée) dans lesquelles elles maintiennent le premier élément éloigné du second élément respectivement d'une première et d'une seconde distances choisies, la seconde distance étant supérieure à la première;
➢ trois paires de lames dans chacune desquelles les deux lames peuvent constituer deux côtés non parallèles d'un trapèze une fois qu'elles sont placées dans leurs positions finales respectives. ;
➢ en variante, trois paires de lames dans chacune desquelles les deux lames peuvent constituer deux côtés d'un triangle une fois qu'elles sont placées dans leurs positions finales respectives.

Le dispositif de support selon l'invention peut comporter d'autres caractéristiques qui peuvent être prises séparément ou en combinaison, et notamment :
- les lames de chaque paire peuvent être de longueurs identiques afin que le trapèze correspondant soit de type isocèle ;
- les lames de chaque paire peuvent être de longueurs identiques afin que le triangle correspondant soit de type isocèle ;
   - un premier cadre sur lequel peuvent être fixés le premier élément et la première extrémité de chaque lame, afin d'être solidarisée au premier élément, et un deuxième cadre sur lequel peuvent être fixés le second élément et la deuxième extrémité de chaque lame, afin d'être solidarisée au second élément ;
      ➢ les première et deuxième extrémités de chaque lame peuvent être respectivement fixées aux premier et deuxième cadres par une liaison mécanique et/ou un matériau d'immobilisation destiné(e)(s) à bloquer tout degré de liberté de mouvement ;
      ➢ chaque lame peut comprendre une première sous-lame comportant la première extrémité et une troisième extrémité et une seconde sous-lame comportant la deuxième extrémité et une quatrième extrémité. Dans ce cas, on peut prévoir un troisième cadre intercalé entre les premier et deuxième cadres et sur lequel sont fixés la troisième extrémité de chaque première sous-lame et la quatrième extrémité de chaque seconde sous-lame ;
         - les troisième et quatrième extrémités de chaque première sous-lame et chaque seconde sous-lame peuvent être fixées au troisième cadre par une liaison mécanique et/ou un matériau d'immobilisation destiné(e)(s) à bloquer tout degré de liberté de mouvement ;
   - des moyens d'amortissement peuvent être chargés d'amortir le déplacement du second élément lorsque chaque lame rejoint sa position finale ;
   - des moyens de guidage peuvent être chargés de guider une partie au moins du déplacement du second élément lorsque chaque lame évolue de sa position initiale (repliée ou lovée ou enroulée) vers sa position finale (dépliée ou délovée ou déroulée), ou en d'autres termes de borner la cinématique du mouvement de déploiement ;
   - des moyens de déplacement peuvent être chargés de déplacer la première extrémité et/ou la deuxième extrémité de l'une au moins des lames afin de contrôler sa position finale et le positionnement du premier élément par rapport au second élément ;
   - des moyens d'immobilisation escamotables peuvent être chargés d'immobiliser le premier élément et/ou le second élément par rapport à une structure rigide de l'équipement tant que chaque lame est placée dans sa position initiale ;
   - chaque lame flexible peut être agencée de manière à supporter au moins deux courbures dans au moins un plan choisi lorsqu'elle est placée dans la position initiale ;
      ➢ chaque lame flexible est par exemple capable de supporter au moins deux courbures dans un même plan lorsqu'elle est placée dans sa position initiale ;
      ➢ en variante chaque lame flexible est par exemple capable de supporter au moins deux courbures dans au moins deux plans différents lorsqu'elle est placée dans sa position initiale ;
      ➢ chaque lame flexible peut être réalisée en fibres de carbone ;
   - le premier élément est par exemple un miroir, éventuellement de type primaire ;
   - le second élément est par exemple un miroir secondaire ou une partie d'un détecteur, installée dans un plan focal.

L'invention propose également un équipement spatial, de type instrument d'observation, comportant au moins un ensemble de premier et second éléments supporté par au moins un dispositif de support du type de celui présenté ci-avant.

D'autres caractéristiques et avantages de l'invention apparaîtront à l'examen de la description détaillée ci-après, et des dessins annexés, sur lesquels :
- les figures 1A et 1B illustrent de façon très schématique, respectivement dans des vues en coupe transversale (et diamétrale) et du dessus, un dispositif de support d'éléments de télescope, selon l'état de la technique, placé dans sa position initiale (lames repliées par courbures),
- la figure 2 illustre de façon très schématique, dans une vue de côté, le dispositif de support des figures 1A et 1B, lorsqu'il est placé dans sa position finale (dépliée),
- la figure 3 illustre de façon très schématique, dans une vue de côté, un exemple de réalisation de moyen de déplacement de type « réptateur » (ou « inchworm »),
- la figure 4 illustre de façon très schématique, dans une vue en perspective, un premier exemple de réalisation d'un dispositif de support d'éléments de télescope, selon l'invention, placé dans sa position finale (dépliée),
- la figure 5 illustre de façon très schématique, dans une vue du dessus légèrement déformée, le premier exemple de réalisation du dispositif de support de la figure 4, lorsqu'il est placé dans sa position finale (dépliée),
- la figure 6 illustre de façon très schématique et partielle, dans une vue en perspective, un exemple de mode de fixation d'un second miroir sur un deuxième cadre,
- la figure 7 illustre de façon très schématique, dans une vue de côté, le premier exemple de réalisation du dispositif de support de la figure 4, lorsqu'il est placé dans sa position initiale (lames repliées par courbures),
- la figure 8 illustre de façon très schématique, dans une vue de côté, le premier exemple de réalisation du dispositif de support de la figure 4, lorsqu'il est placé dans sa position finale (dépliée),
- la figure 9 illustre de façon très schématique, dans une vue en perspective, un exemple de mode de fixation des lames flexibles déployables d'un dispositif de support selon l'invention,
- la figure 10 illustre de façon schématique, dans une vue en perspective, un deuxième exemple de réalisation d'un dispositif de support d'éléments de télescope, selon l'invention, placé dans sa position finale (dépliée), et
- la figure 11 illustre de façon très schématique, dans une vue du dessus, le deuxième exemple de réalisation du dispositif de support de la figure 10, lorsqu'il est placé dans sa position finale (dépliée).

Les dessins annexés pourront non seulement servir à compléter l'invention, mais aussi contribuer à sa définition, le cas échéant.

L'invention a pour objet de permettre la réduction de la masse et de l'inertie, notamment transverse, d'un équipement spatial embarqué sur au moins un satellite destiné à être installé en orbite au moyen d'une fusée (ou d'un lanceur).

A cet effet, l'invention propose un dispositif de support (D) destiné à supporter au moins deux éléments, d'un équipement spatial, embarqués sur un même satellite.

On considère dans ce qui suit que l'équipement spatial est un instrument d'observation tel qu'un télescope embarqué sur un satellite d'observation, par exemple de type agile.

Mais, l'invention n'est pas limitée à ce type d'équipement spatial. En effet, il pourrait s'agir d'un instrument d'observation constitué de plusieurs télescopes répartis sur plusieurs satellites volant en formation, ou bien d'une antenne radar comportant un premier élément tel qu'un réflecteur et un second élément tel qu'une source. Il pourrait également s'agir de tuyères dites plasmiques destinées à contrôler l'attitude du satellite et devant être déployées une fois le satellite en orbite, de manière à augmenter le bras de levier pour réduire les forces à appliquer. Il pourrait également s'agir de capteurs dont une partie, destinée à l'acquisition de données, doit être écartée du satellite une fois celui-ci placé sur son orbite, de manière à ne pas faire l'objet d'une perturbation électromagnétique ou simplement électrique.

Le dispositif de support (D) selon l'invention fait partie de l'équipement, ici un télescope, dont il supporte au moins deux des éléments et est généralement solidarisé à la structure du satellite. Lorsque l'instrument d'observation est constitué de plusieurs télescopes embarqués sur plusieurs satellites, il comporte plusieurs ensembles de premier et second éléments, chacun supporté par un dispositif de support D installé sur l'un des satellites.

Dans ce qui suit, on considère à titre d'exemple non limitatif que le télescope est de type Cassegrain et que les deux éléments supportés par le dispositif de support (D) selon l'invention sont un miroir dit « primaire » et un miroir dit « secondaire ».

Mais l'invention n'est pas limitée à ce type de télescope spatial. Elle concerne en effet tous les télescopes (ou instruments d'observation) dans lesquels deux éléments participant à l'observation (ou acquisition de données) doivent être éloignés l'un de l'autre d'une distance choisie. Ces deux éléments peuvent par conséquent être deux miroirs (l'un étant de type primaire et l'autre de type secondaire), comme par exemple dans le cas des télescopes de type Grégory, Korsch ou Ritchey-Chrétien, ou un miroir et une partie d'un détecteur, implantée au niveau du plan focal où se forment les images, comme par exemple dans le cas d'un télescope de type Newton, ou encore un miroir plan de renvoi et un autre miroir.

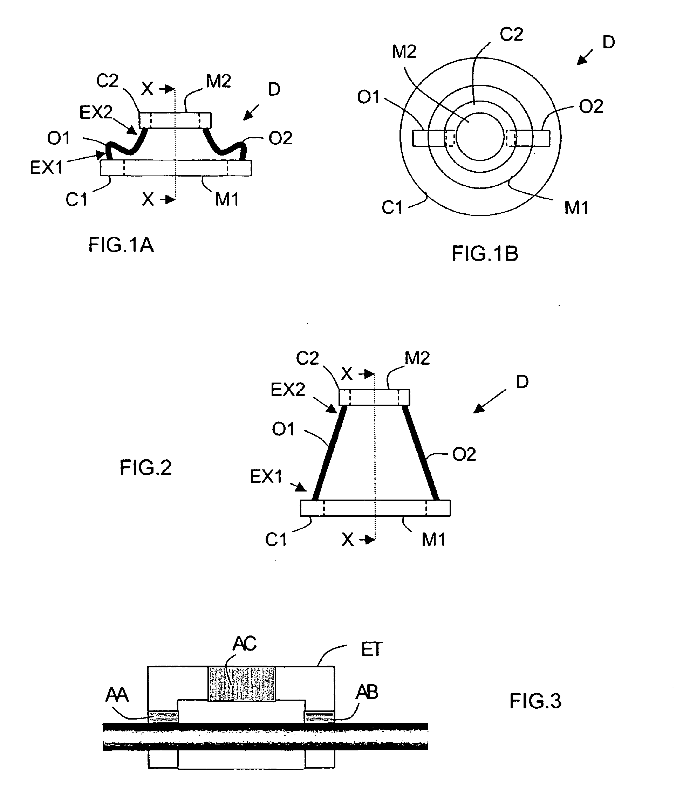

On se réfère tout d'abord aux figures 1 et 2 pour décrire un dispositif de support D selon l'état de la technique.

Le dispositif de support D comprend au moins deux lames flexibles déployables 01 et 02 comportant chacune des première EX1 et deuxième EX2 extrémités respectivement solidarisées au miroir primaire M1 et au miroir secondaire M2 du télescope (ou à la partie d'un détecteur située dans le plan focal).

Dans l'exemple illustré sur les figures 1 et 2, le dispositif de support D ne comprend que deux lames flexibles déployables 01 et 02. Mais, comme on le verra plus loin il peut en comporter plusieurs, par exemple trois ou quatre, voire même plus.

Il est important de noter que la solidarisation des extrémités EX1 et EX2 de chaque lame 01, 02 aux miroirs primaire M1 et secondaire M2 peut être directe ou indirecte. Dans l'exemple illustré sur les figures 1 et 2, cette solidarisation est indirecte. Plus précisément, le dispositif de support D comprend, d'une part, un premier cadre rigide C1 sur lequel est fixé le miroir primaire M1 et la première extrémité EX1 de chaque lame flexible 01, 02, et d'autre part, un deuxième cadre rigide C2 sur lequel est fixé le miroir secondaire M2 et la deuxième extrémité EX2 de chaque lame flexible 01, 02.

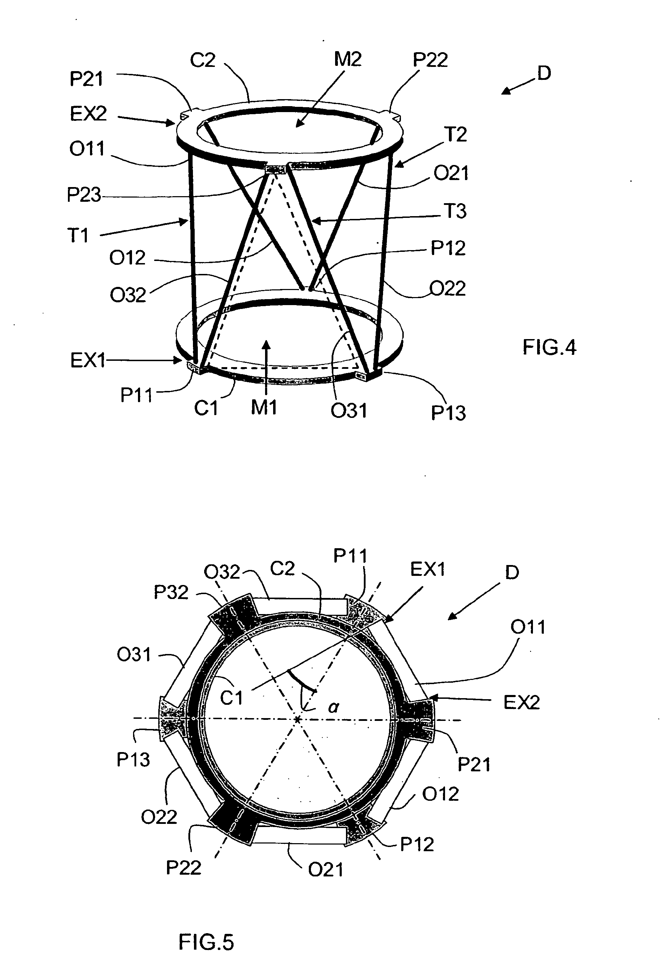

Dans l'exemple, illustré schématiquement sur les figures 1 et 2, le deuxième cadre C2 présente un diamètre plus petit que celui du premier cadre C1. Mais, comme on le verra plus loin en référence aux figures 4 à 9, les premier C1 et second C2 cadres peuvent présenter des diamètres sensiblement identiques.

Tout moyen de fixation peut être envisagé pour solidariser les première EX1 et deuxième EX2 extrémités de chaque lame 01, 02 (ici) aux premier C1 et deuxième C2 cadres. Cela peut par exemple se faire au moyen d'une liaison mécanique destinée à bloquer tout degré de liberté de mouvement. En variante ou en complément, on peut noyer (ou « empoter ») chaque extrémité EX1, EX2 dans un matériau d'immobilisation, comme par exemple une résine polymérisable, afin de bloquer tout degré de liberté de mouvement.

Les lames 01, 02 sont agencées de manière à prendre au moins des positions initiales repliées par courbures dans lesquelles elles maintiennent le miroir primaire M1 éloigné du miroir secondaire M2 d'une première distance choisie, et des positions finales dépliées dans lesquelles elles maintiennent le miroir primaire M1 éloigné du miroir secondaire M2 d'une seconde distance choisie, supérieure à la première.

Il est important de noter que les repliements (ou les courbures) d'une lame flexible 01, 02 peuvent tous être situés sensiblement dans un même plan, ou bien dans au moins deux plans différents (en raison de sa flexibilité). Par ailleurs, les repliements (ou les courbures) des différentes lames flexibles 01 et 02 ne sont pas nécessairement identiques entre eux.

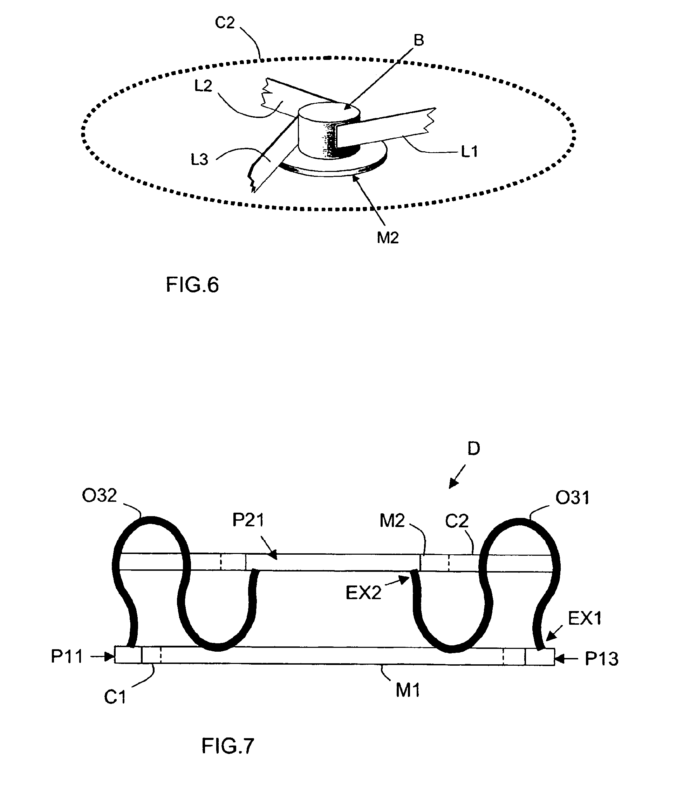

On peut par exemple utiliser des lames flexibles incurvées, du type de celle qui est partiellement illustrée sur la figure 6. Chaque lame flexible 01, 02 pourrait être agencée sous la forme d'un mètre à ruban métallique. Cependant, afin de présenter la stabilité thermique requise, chaque lame 01, 02 est préférentiellement réalisée en fibres de carbone.

Chaque lame flexible peut également être constituée de deux lames de type mètre ruban, rattachées par leurs bords longitudinaux et positionnées de sorte que les cavités définies par leurs bombements soient face à face une fois placées dans la position finale. Lorsqu'elles sont en position repliées, les deux lames sont plaquées l'une contre l'autre et sont dépourvues de bombement.

Comme cela est schématiquement illustré sur la figure 1A, chaque lame flexible 01, 02 supporte au moins deux courbures dans au moins un plan choisi lorsqu'elle est placée dans sa position initiale. Le nombre de courbures que doit supporter une lame flexible dépend en fait de la place disponible pour le repliement et/ou de la longueur qu'elle doit présenter lorsqu'elle est dépliée, c'est-à-dire placée dans sa position finale illustrée sur la figure 2 et/ou de sa limite élastique qui est associée à un rayon de courbure minimal en dessous duquel elle peut être définitivement déformée (délaminée).

Comme cela est illustré sur la figure 1A, lorsque les lames 01 et 02 sont placées dans leur position initiale repliée les miroirs primaire M1 et secondaire M2 sont rapprochés, de manière à rendre compact (ou à réduire son extension longitudinale initiale de) ce que l'homme de l'art appelle habituellement le « tube » du télescope, suivant son axe de révolution XX, tant que le satellite sur lequel il est embarqué n'a pas rejoint son orbite de mission.

Grâce à cette compacité (ou ce faible encombrement) et à la structure allégée qu'offre le dispositif de support D, on peut utiliser une fusée de plus petite capacité d'emport et/ou augmenter le nombre de satellites qu'une fusée peut placer en orbite (ou lancer).

La structure de support étant allégée, il est préférable de prévoir des moyens d'immobilisation destinés à immobiliser, pendant la phase de lancement, le miroir secondaire (second élément) M2 (ou plus précisément le deuxième cadre C2 auquel il est fixé), ainsi qu'éventuellement chaque lame flexible déployable 01, 02, par rapport à la structure principale du télescope (à laquelle est fixé le miroir primaire (premier élément) M1 (ou plus précisément le premier cadre C1 auquel il est fixé)). Tout moyen d'immobilisation escamotable connu de l'homme de l'art peut être utilisé à cet effet.

Comme cela est illustré sur la figure 2, lorsque les lames 01 et 02 sont placées dans leur position finale dépliée les miroirs primaire M1 et secondaire M2 sont éloignés de la seconde distance choisie, qui est celle dans laquelle le télescope fonctionne de façon optimale. L'encombrement du tube du télescope est donc notablement plus important que lorsque les lames 01 et 02 sont dans leur position initiale repliée. Cependant, la structure de support étant allégée, l'inertie du télescope est réduite, si bien que la vitesse à laquelle il peut être dépointé est accrue, permettant ainsi d'augmenter le temps pendant lequel il peut acquérir des images.

Les première EX1 et deuxième EX2 extrémités de chaque lame 01 et 02 étant fixées sur des parties des premier C1 et deuxième C2 cadres qui sont situées à la périphérie des miroirs primaire M1 et secondaire M2, aucune lame 01, 02 ne se trouve sur le trajet des photons collectés par le télescope. En d'autres termes, la ou les lames flexibles déployables respecte(nt) le champ de vue du télescope.

Les lames flexibles Oij sont préférentiellement maintenues pendant la phase de lancement dans leur position initiale (sous contrainte élastique) grâce à des moyens d'immobilisation escamotables (non représentés). Il est également préférable de prévoir des moyens d'immobilisation escamotables destinés à immobiliser pendant la phase de lancement le miroir secondaire (second élément) M2 (ou plus précisément le deuxième cadre C2 auquel il est fixé), par rapport à la structure principale du télescope (à laquelle est fixé le miroir primaire (premier élément) M1 (ou plus précisément le premier cadre C1 auquel il est fixé)). Tout moyen d'immobilisation escamotable connu de l'homme de l'art peut être utilisé à cet effet.

Par ailleurs, en raison du choc subi par le miroir secondaire M2 lorsque les lames flexibles 01 et 02 libérées parviennent dans leur position finale, il est préférable de prévoir des moyens chargés d'amortir le déplacement dudit miroir secondaire M2. Tout moyen d'amortissement connu de l'homme de l'art peut être utilisé à cet effet, et notamment celui utilisé pour l'amortissement des panneaux solaires déployables.

En outre, afin d'éviter que le dépliement simultané des différentes lames 01 et 02 ne provoque un positionnement non conforme du miroir secondaire M2, on peut prévoir des moyens de guidage. Ces derniers sont alors chargés de guider une partie au moins du déplacement du miroir secondaire M2 (second élément) pendant la transition des lames 01 et 02 de leur position initiale repliée vers leur position finale dépliée. Tout moyen de guidage connu de l'homme de l'art peut être utilisé à cet effet, et notamment des câbles ou des fils reliant les premier C1 et deuxième C2 cadres (par exemple).

De plus, afin de permettre des très faibles désorientations du miroir secondaire (second élément) M2 par rapport au miroir primaire (premier élément) M1, le dispositif de support peut comporter des moyens de déplacement. Ces derniers sont plus précisément chargés de déplacer la première extrémité E1 et/ou la deuxième extrémité E2 de l'une au moins des lames flexibles 01 et 02 par rapport au cadre C1 ou C2 auquel elle est solidarisée, afin de contrôler sa position finale et donc le positionnement du miroir secondaire M2 par rapport au miroir primaire M1.

Tout moyen de déplacement connu de l'homme de l'art peut être utilisé à cet effet, et notamment des composants piézoélectriques permettant un déplacement dit « en chenille », tels que les actionneurs du type dit « réptateur » (ou « inchworm »).

Les inchworms (ou actionneurs pas à pas du type à reptation) permettent de réaliser des déplacements relatifs de très grande amplitude avec des résolutions très petites. Ils peuvent être utilisés pour réaliser des déploiements de structures micrométriques, telles que les structures de télescopes spatiaux à déploiement en orbite, pour lesquelles de grands débattements initiaux (typiquement de l'ordre de 3 mètres et plus) côtoient des ajustements de très faible amplitude (typiquement quelques microns) sur toute la durée de vie de l'instrument d'observation.

On a représenté schématiquement sur la figure 3 un exemple d'étrier ET permettant de se déplacer pas à pas sur un tube de guidage grâce à trois actionneurs piézoélectriques AA, AB et AC fonctionnant selon deux séquences possibles : marche avant ou marche arrière. Les actionneurs AA et AB sont des pinces électriques qui permettent de bloquer l'une ou l'autre des jambes de l'étrier sur le tube de guidage. Le corps de l'étrier peut s'allonger grâce à l'actionneur AC, faisant ainsi glisser la jambe libre sur le tube. Ce dernier peut être remplacé par une lame flexible et l'étrier peut être lié à l'un des cadres constituant le tube du télescope, cette fois.

On se réfère maintenant aux figures 4 à 9 pour décrire un premier exemple de réalisation d'un dispositif de support D selon l'invention.

Dans ce premier exemple de réalisation, le dispositif de support D comprend six lames flexibles déployables Oij, coopérant par paire. Ici, l'indice i est compris entre 1 et 3 et permet de désigner une paire de lames, et l'indice j est compris entre 1 et 2 et permet de différencier les deux lames d'une même paire. Par conséquent, la première paire (i=1) comprend les lames 011 et O12, la deuxième paire (i=2) comprend les lames 021 et 022, et la troisième paire (i=3) comprend les lames 031 et 032.

Tout moyen de fixation peut être envisagé pour solidariser les première EX1 et deuxième EX2 extrémités de chaque lame Oij (ici) aux premier C1 et deuxième C2 cadres.

Les six lames flexibles sont légèrement déportées vers l'extérieur du tube grâce aux pattes de fixation Pkn afin de ne pas intercepter le flux optique utile (délimité ici par le diamètre intérieur des cadres C1 et C2).

Ici, les premier C1 et second C2 cadres présentent des diamètres sensiblement identiques. Mais cela n'est pas obligatoire. Le second miroir M2, qui est plus petit que le premier miroir M1, est alors préférentiellement rattaché au deuxième cadre C2 par l'intermédiaire de trois lames rigides placées de façon tangentielle à 120° les unes des autres, par exemple. Un tel mode de fixation est partiellement et schématiquement illustré sur la figure 6.

Dans ce mode de fixation, on prévoit un boîtier B contenant un dispositif de fixation de miroir (DFM), non représenté, sur lequel on vient coller le second miroir M2. Le dispositif de fixation de miroir (intermédiaire entre le boîtier B et le second miroir M2) a pour rôle de filtrer les contraintes dues aux vis de fixation (serrage) qui pourraient déformer le second miroir M2.

Le boîtier B est fixé au deuxième cadre C2 par l'intermédiaire d'un dispositif, généralement appelé araignée, et constitué de trois lames rigides L1 à L3 tangentes à la surface latérale dudit boîtier B. La dilatation des lames (due par exemple à la méconnaissance de la température exacte de fonctionnement du télescope en orbite) se traduit par une rotation du boîtier B qui ne dérègle pas l'instrument d'observation et n'entraîne pas de contraintes sur le second miroir M2.

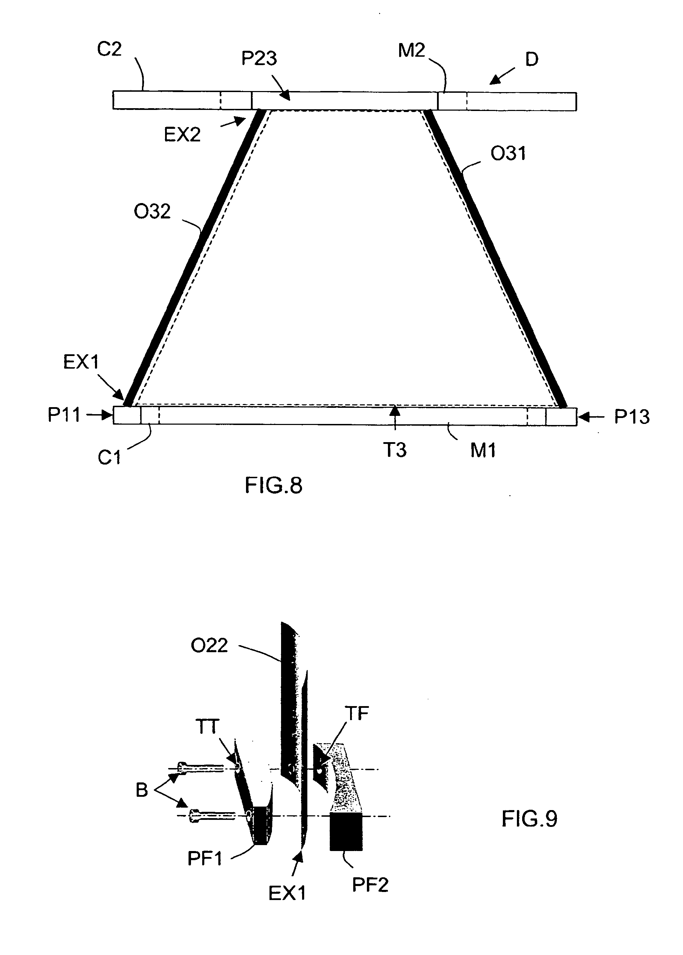

La solidarisation des première EX1 et deuxième EX2 extrémités peut par exemple se faire au moyen d'une liaison mécanique destinée à bloquer tout degré de liberté de mouvement. Un exemple de liaison mécanique est illustré sur la figure 9. Ici, chaque extrémité EX1 ou EX2 d'une lame Oij (par exemple 022) est encastrée entre deux pièces d'immobilisation PF1 et PF2.

La pièce PF2 est par exemple solidaire (ou fait partie intégrante) d'une patte de fixation Pkn de l'un des premier C1 et deuxième C2 cadres et comporte deux trous filetés TF. Ici, l'indice k est compris entre 1 et 3 et permet de désigner l'une des trois pattes de fixation du premier C1 ou du deuxième C2 cadre, et l'indice n est compris entre 1 et 2 et permet de désigner le premier C1 ou le deuxième C2 cadre. Par conséquent, les pattes de fixation P11, P12 et P13 appartiennent au premier cadre C1, tandis que les pattes de fixation P21, P22 et P23 appartiennent au deuxième cadre C2.

La pièce PF1 présente par exemple une portion dont la forme (ici convexe) est complémentaire de celle (ici concave) d'une portion de la pièce PF1 et comprend deux trous traversants TT pour permettre le passage de boulons B. La pièce PF2 est rapportée ou solidaire (ou fait partie intégrante) d'une patte de fixation Pkn de l'un des premier C1 et deuxième C2 cadres.

Chaque extrémité EX1 ou EX2 comprend également deux trous traversants pour permettre le passage des boulons B et donc son immobilisation par rapport aux pièces PF1 et PF2.

Bien entendu, on peut se passer des pattes de fixation Pkn qui font ici saillie à la périphérie des premier C1 et deuxième C2 cadres.

En variante ou en complément, on peut noyer (ou empoter) chaque extrémité EX1, EX2 dans un matériau d'immobilisation, comme par exemple une résine polymérisable, afin de bloquer tout degré de liberté de mouvement.

Comme cela est schématiquement illustré sur la figure 7, chaque lame flexible Oij (seules 032 et 031 sont représentées) supporte ici quatre courbures dans au moins un plan choisi lorsqu'elle est placée dans sa position initiale repliée. Le nombre de courbures que doit supporter une lame flexible dépend également de la place disponible pour le repliement et/ou de la longueur qu'elle doit présenter lorsqu'elle est dépliée, c'est-à-dire placée dans sa position finale illustrée sur la figure 8.

Il est important de noter que les repliements (ou les courbures) d'une lame flexible Oij peuvent tous être situés sensiblement dans un même plan, ou bien dans au moins deux plans différents (en raison de sa flexibilité). Par ailleurs, les repliements (ou les courbures) des différentes lames flexibles Oij ne sont pas nécessairement identiques entre eux.

Le plan moyen de chaque lame flexible peut être orienté de manière optimale pour permettre le repliement des lames flexibles dans six plans perpendiculaires au plan du premier cadre C1 et pour faciliter le guidage pendant le déploiement. Chacun de ces six plans est propre à une lame et défini par les trois points EX1, EX2 en position lame repliée et EX2 en position lame dépliée. Le plan moyen de la lame flexible doit alors être perpendiculaire à ce plan. En effet, dans ce cas, les lames repliées ne sont pas sollicitées latéralement ce qui améliore leur stabilité en position repliée.

Sur la figure 5 se trouve schématiquement illustrée l'orientation optimale des lames flexibles dans une vue de dessus du tube du télescope. Le diamètre intérieur du cadre C1 a été ici réduit légèrement pour faciliter la compréhension. La trace de la première extrémité EX1 de la lame flexible 011 sur la patte de fixation P11 forme ici un angle α d'environ 30° avec l'axe de symétrie le plus proche. Il en est de même pour toutes les extrémités de lames flexibles.

Par ailleurs, il est préférable de prévoir des moyens chargés d'amortir le déplacement du miroir secondaire M2 (second élément) et/ou des moyens chargés de guider le miroir secondaire M2 et/ou des moyens escamotables chargés d'immobiliser les deuxième C2 et troisième C3 cadres, ainsi qu'éventuellement les lames Oij. Il est également possible de prévoir des moyens chargés de déplacer l'une au moins des premières EX1 et/ou deuxièmes EX2 extrémités des lames Oij.

Comme évoqué précédemment, dans ce premier exemple de réalisation les lames flexibles Oij coopèrent préférentiellement par paire. Plus précisément, le dispositif de support D comporte au moins trois paires de lames flexibles Oij dans chacune desquelles les deux lames (Oi1 et Oi2) constituent deux côtés non parallèles d'un polyèdre présentant trois côtés (triangle) ou quatre côtés (trapèze), une fois qu'elles sont placées dans leurs positions finales respectives. Ces trois paires de lames flexibles Oij définissent un hexapode une fois qu'elles sont placées dans leurs positions finales respectives (voir figure 4). Cet hexapode est replié sensiblement suivant l'axe de symétrie principal XX lorsque les trois paires de lames flexibles Oij sont placées dans leurs positions initiales respectives.

Dans l'exemple illustré sur la figure 4, deux lames flexibles Oi1 et Oi2 de chacune des trois paires constituent deux côtés non parallèles d'un trapèze Ti (T1 à T3), matérialisé par des pointillés dans le cas de T3, une fois qu'elles sont placées dans leurs positions finales respectives.

Du fait de cet agencement particulier, les deux lames flexibles Oij d'une paire créent des forces dont les composantes vectorielles contribuent à établir un équilibre dans le plan de la figure. L'équilibre de l'ensemble est alors assuré par la coopération des trois paires de lames dont les deuxièmes extrémités E2 sont réparties judicieusement à la périphérie du deuxième cadre C2. Plus précisément, les deuxièmes extrémités E2 sont ici solidarisées aux pattes de fixation Pkn qui sont placées sensiblement à 120° les unes des autres.

Cet équilibre est optimisé lorsque les lames flexibles Oij des différentes paires sont de longueurs identiques, et donc que les trapèzes Ti correspondants sont de type isocèle.

II est clair que plus la distance séparant les deuxièmes extrémités E2 des deux lames flexibles Oij d'une paire est petite, plus le polyèdre, auquel participent les lames, tend vers un triangle. Comme dans le cas des trapèzes, l'équilibre de la structure est optimisé lorsque les lames flexibles Oij des différentes paires sont de longueurs identiques, et donc que les triangles Ti correspondants sont de type isocèle.

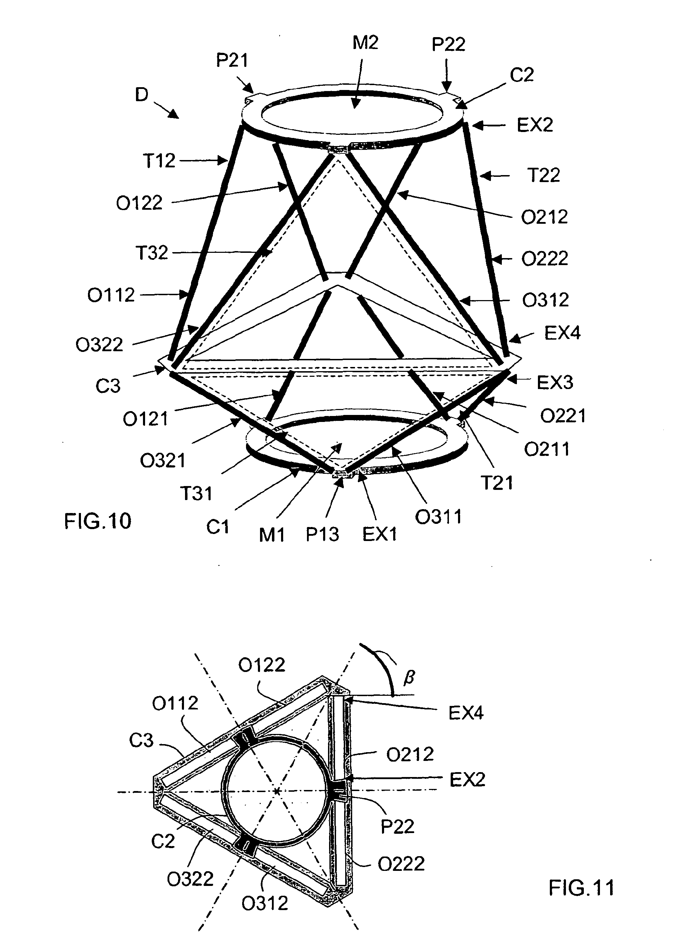

On se réfère maintenant aux figures 10 et 11 pour décrire un deuxième exemple de réalisation d'un dispositif de support D selon l'invention.

Dans ce deuxième exemple de réalisation, chaque lame flexible déployable Oij est subdivisée en des première Oij1 et seconde Oij2 sous-lames.

Chaque première sous-lame Oij1 comprend la première extrémité EX1 et une troisième extrémité EX3 et chaque seconde sous-lame Oij2 comprend la deuxième extrémité EX2 et une quatrième extrémité EX4.

Par exemple, chaque seconde sous-lame Oij2 est flexible, tandis que chaque première sous-lame Oij1 peut être soit flexible, soit rigide.

Chaque troisième extrémité EX3 d'une première sous-lame Oij1 est solidarisée indirectement à la quatrième extrémité EX4 de la seconde sous-lame avec laquelle elle constitue une lame Oij, par l'intermédiaire d'un troisième cadre rigide C3 intercalé entre les premier C1 et deuxième C2 cadres. Plus précisément, la troisième extrémité EX3 de chaque première sous-lame Oij1 est solidarisée à une première face du troisième cadre C3, tandis que la quatrième extrémité EX4 de chaque seconde sous-lame Oij2 est solidarisée à une seconde face du troisième cadre C3, par exemple opposée à la première face, et sensiblement au même niveau que la troisième extrémité EX3 correspondante.

Comme dans le premier exemple de réalisation, tout moyen de fixation peut être envisagé pour solidariser les troisième EX3 et quatrième EX4 extrémités des sous-lames Oij1 et Oij2 au troisième cadre C3.

La solidarisation peut par exemple se faire au moyen d'une liaison mécanique destinée à bloquer tout degré de liberté de mouvement, et par exemple par encastrement comme illustré sur la figure 9. En variante ou en complément, on peut noyer (ou empoter) chaque extrémité EX3, EX4 dans un matériau d'immobilisation, comme par exemple une résine polymérisable, afin de bloquer tout degré de liberté de mouvement.

Dans l'exemple illustré sur les figures 10 et 11 le troisième cadre C3 est agencé sous la forme d'un triangle équilatéral. Bien que cela n'apparaisse pas sur la figure 10, le cadre est évidé en son centre. Mais d'autres formes de cadre peuvent être envisagées.

Dans ce deuxième exemple, comme dans le premier exemple présenté ci-avant en référence aux figures 4 à 9, les premières sous-lames Oij1 coopèrent par paire, tout comme les secondes sous-lames Oij2.

Chaque sous-lame Oij1, Oij2 est du même type que celles présentées ci-avant dans les premier et deuxième exemples de réalisation. Le mode de repliement des premières sous-lames Oij1 dans leur position initiale repliée par courbures, tout comme celui des secondes sous-lames Oij2, est donc identique à celui décrit précédemment, chaque sous-lame devant supporter au moins deux courbures dans au moins un plan.

Dans l'exemple illustré sur la figure 10, le dispositif de support D comporte trois paires de premières sous-lames (flexibles ou rigides) Oij1 dans chacune desquelles les deux sous-lames (Oi11 et Oi21) constituent deux côtés non parallèles d'un polyèdre présentant trois côtés (triangle) ou quatre côtés (trapèze), une fois qu'elles sont placées dans leurs positions finales respectives.

Lorsqu'elles sont flexibles, ces trois paires de premières sous-lames Oij1 ((0111, 0121), (0211, 0221), (0311, O321)) définissent un premier hexapode une fois qu'elles sont placées dans leurs positions finales respectives. Sinon elles constituent un premier hexapode dès l'origine.

Ce premier hexapode est, en cas de flexibilité, replié sensiblement suivant l'axe de symétrie principal XX lorsque les trois paires de premières sous-lames flexibles Oij1 sont placées dans leurs positions initiales respectives.

Par ailleurs, le dispositif de support D comporte également trois paires de secondes sous-lames flexibles Oij2 dans chacune desquelles les deux sous-lames (Oi12 et Oi22) constituent deux côtés non parallèles d'un polyèdre présentant trois côtés (triangle) ou quatre côtés (trapèze), une fois qu'elles sont placées dans leurs positions finales respectives. Ces trois paires de secondes sous-lames flexibles Oij2 ((O112, 0122), (0212, 0222), (0312, 0322)) définissent un second hexapode une fois qu'elles sont placées dans leurs positions finales respectives. Ce second hexapode est également replié sensiblement suivant l'axe de symétrie principal XX lorsque les trois paires de secondes sous-lames flexibles Oij2 sont placées dans leurs positions initiales respectives.

La structure de support est donc en quelque sorte constituée de deux hexapodes montés tête-bêche.

Dans l'exemple illustré sur la figure 10, deux premières sous-lames Oi11 et Oi21 de chacune des trois paires du premier hexapode constituent deux côtés non parallèles d'un trapèze Ti1 (T11 à T31), matérialisé par des pointillés dans le cas de T31, une fois qu'elles sont placées dans leurs positions finales respectives. Par ailleurs, deux secondes sous-lames flexibles Oi12 et Oi22 de chacune des trois paires du second hexapode constituent deux côtés non parallèles d'un autre trapèze Ti2 (T12 à T32), matérialisé par des pointillés dans le cas de T12, une fois qu'elles sont placées dans leurs positions finales respectives.

Il est important de noter que les paires de premières sous-lames Oi11 et Oi21 peuvent constituer des côtés parallèles de polyèdres (triangles ou trapèzes) présentant de premières dimensions, et les paires de secondes sous-lames Oi12 et Oi22 peuvent constituer des côtés parallèles de polyèdres (triangles ou trapèzes) présentant de secondes dimensions, éventuellement différentes des premières dimensions (comme c'est le cas dans l'exemple illustré). On peut également envisager que les paires de premières sous-lames Oi11 et Oi21 constituent des côtés parallèles de polyèdres d'un premier type (par exemple des triangles), tandis que les paires de secondes sous-lames Oi12 et Oi22 constituent des côtés parallèles de polyèdres d'un second type (par exemple des trapèzes).

Le mode de repliement des premières sous-lames Oij1 dans leur position initiale, peut donc être différent de celui des secondes sous-lames Oij2 dans leur position initiale. En d'autres termes, le nombre de courbures supportées par les premières sous-lames Oij1 peut être différent de celui supporté par les secondes sous-lames Oij2. Il en va de même du nombre de plans dans lesquelles sont effectuées les repliements (ou courbures).

Comme dans le premier exemple, les trapèzes et/ou triangles constitués sont préférentiellement de type isocèle.

La configuration illustrée sur les figures 10 et 11 est avantageuse en terme de stabilité. Elle peut être rendue optimale lorsque le troisième cadre C3 s'inscrit dans un cercle qui présente un diamètre double de celui des premier C1 et deuxième C2 cadres. La trace de l'extrémité EX4 de la lame 0212 sur le troisième cadre C3 forme un angle β d'environ 60° avec l'axe de symétrie le plus proche. La trace de l'extrémité EX2 de la lame 0212 est sensiblement parallèle à l'axe de symétrie le plus proche. Avec une telle orientation des lames flexibles, chacun des trois triangles peut se replier dans le même plan que les deux lames flexibles qui le constituent. Dans ce cas, les lames repliées ne sont pas (ou quasiment pas) sollicitées latéralement (hors du plan de chaque triangle) ce qui améliore la stabilité de la position repliée.

Par ailleurs, comme dans le premier exemple, il est préférable de prévoir des moyens chargés d'amortir le déplacement du miroir secondaire M2 (second élément) et/ou des moyens chargés de guider le miroir secondaire M2 et/ou des moyens escamotables chargés d'immobiliser les deuxième C2 et troisième C3 cadres, ainsi qu'éventuellement les premières Oij1 et secondes Oij2 sous-lames. Il est également possible de prévoir des moyens chargés de déplacer l'une au moins des premières EX1 et/ou deuxièmes EX2 et/ou troisièmes EX3 et/ou quatrièmes EX4 extrémités des sous-lames Oij1 et Oij2.

L'invention ne se limite pas aux modes de réalisation de dispositif de support et de télescope spatial décrits ci-avant, seulement à titre d'exemple, mais elle englobe toutes les variantes que pourra envisager l'homme de l'art dans le cadre des revendications ci-après.

## Revendications

1. Dispositif (D) de support de premier (M1) et second (M2) éléments d'un équipement spatial, comprenant au moins deux lames flexibles déployables (Oij) comprenant chacune une première (EX1) et une deuxième (EX2) extrémités respectivement pouvant être solidarisées auxdits premier (M1) et second (M2) éléments et chacune agencée de manière à prendre au moins une position initiale repliée par courbures et une position finale dépliée dans lesquelles elles maintiennent le premier élément (M1) éloigné du second élément (M2) respectivement d'une première et d'une seconde distances choisies, ladite seconde distance étant supérieure à la première distance;
**caractérisé en ce qu'**il comprend trois paires de lames dans chacune desquelles deux desdites lames (Oi1, Oi2) constituent deux côtés non parallèles d'un trapèze (Ti) une fois placées dans leurs positions finales respectives.

2. Dispositif (D) de support de premier (M1) et second (M2) éléments d'un équipement spatial, comprenant au moins deux lames flexibles déployables (Oij) comprenant chacune une première (EX1) et une deuxième (EX2) extrémités respectivement pouvant être solidarisées auxdits premier (M1) et second (M2) éléments et chacune agencée de manière à prendre au moins une position initiale repliée par courbures et une position finale dépliée dans lesquelles elles maintiennent le premier élément (M1) éloigné du second élément (M2) respectivement d'une première et d'une seconde distances choisies, ladite seconde distance étant supérieure à la première distance;
**caractérisé en ce qu'**il comprend trois paires de lames dans chacune lesquelles deux desdites lames (Oi1, Oi2) constituent deux côtés d'un triangle (Ti) une fois placés dans leurs positions finales respectives.

3. Dispositif selon la revendication 1, **caractérisé en ce que** lesdites lames (Oi1, Oi2) de chaque paire sont de longueurs identiques de sorte que le trapèze (Ti) correspondant soit de type isocèle.

4. Dispositif selon la revendication 2, **caractérisé en ce que** lesdites lames (Oi1, Oi2) de chaque paire sont de longueurs identiques de sorte que le triangle (Ti) correspondant soit de type isocèle.

5. Dispositif selon l'une des revendications 1 à 4 **caractérisé en ce qu'**il comprend un premier cadre (C1) sur lequel peut être fixé ledit premier élément (M1) et est fixée la première extrémité (EX1) de chaque lame (Oij), de manière à être solidarisée audit premier élément (M1), et un deuxième cadre (C2) sur lequel peut être fixé ledit second élément (M2) et est fixée la deuxième extrémité (EX2) de chaque lame (Oij), de manière à être solidarisée audit second élément (M2).

6. Dispositif selon la revendication 5, **caractérisé en ce que** lesdites première (EX1) et deuxième (eux2) extrémités de chaque lame (Oij) sont respectivement fixées auxdits premier (C1) et deuxième (C2) cadres par une liaison mécanique et/ou un matériau d'immobilisation destiné(e)(s) à bloquer tout degré de liberté de mouvement.

7. Dispositif selon l'une des revendications 1 à 6 en combinaison avec l'une des revendications 5 et 6, **caractérisé en ce que** chaque lame (Oij) comprend une première sous-lames (Oij1) comportant ladite première extrémité (EX1) et une troisième extrémité (EX3) et une seconde sous-lame (Oij2) comportant ladite deuxième extrémité (EX2) et une quatrième extrémité (EX4), et **en ce qu'**il comprend un troisième cadre (C3) intercalé entre lesdits premier (C1) et deuxième (C2) cadres et sur lequel sont fixés la troisième extrémité (EX3) de chaque première sous-lame (Oij1) et la quatrième extrémité (EX4) de chaque seconde sous-lame (Oij2).

8. Dispositif selon la revendication 7, **caractérisé en ce que** lesdites troisième (EX3) et quatrième (EX4) extrémités de chaque première sous-lame (Oij1) et chaque seconde sous-lame (Oij2) sont fixées audit troisième cadre (C3) par une liaison mécanique et/ou un matériau d'immobilisation destiné(e)(s) à bloquer tout degré de liberté de mouvement.

9. Dispositif selon l'une des revendications 1 à 8, **caractérisé en ce qu'**il comprend des moyens d'amortissement agencés de manière à amortir le déplacement dudit second élément (M2) lorsque chaque lame (Oij) rejoint sa position finale.

10. Dispositif selon l'une des revendications 1 à 9, **caractérisé en ce qu'**il comprend des moyens de guidage agencés de manière à guider une partie au moins du déplacement dudit second élément (M2) lorsque chaque lame (Oij) évolue de sa position initiale vers sa position finale.

11. Dispositif selon l'une des revendications 1 à 10, **caractérisé en ce qu'**il comprend des moyens de déplacement agencés pour déplacer la première extrémité (EX1) et/ou la deuxième extrémité (EX2) de l'une au moins desdites lames (Oij) de manière à contrôler sa position finale et le positionnement dudit second élément (M2) par rapport audit premier élément (M1).

12. Dispositif selon l'une des revendications 1 à 11, **caractérisé en ce qu'**il comprend des moyens d'immobilisation escamotables agencés pour immobiliser ledit premier élément (M1) et/ou ledit second élément (M2) par rapport à une structure rigide dudit équipement tant que chaque lame (Oij) est placée dans sa position initiale.

13. Dispositif selon l'une des revendications 1 à 11, **caractérisé en ce que** chaque lame flexible (Oij) est propre à supporter au moins deux courbures dans au moins un plan choisi lorsqu'elle est placée dans ladite position initiale.

14. Dispositif selon la revendication 13, **caractérisé en ce que** ladite lame flexible (Oij, Oij1, Oij2) est propre à supporter au moins deux courbures dans un même plan lorsqu'elle est placée dans ladite position initiale.

15. Dispositif selon la revendication 13, **caractérisé en ce que** ladite lame flexible (Oij, Oij1, Oij2) est propre à supporter au moins deux courbures dans au moins deux plans différents lorsqu'elle est placée dans ladite position initiale.

16. Dispositif selon l'une des revendications 13 à 15, **caractérisé en ce** chaque lame flexible (Oij, Oij1, Oij2) est réalisée en fibres de carbone.

17. Dispositif selon l'une des revendications 1 à 16, **caractérisé en ce que** ledit premier élément (M1) peut être un miroir primaire.

18. Dispositif selon l'une des revendications 1 à 17, **caractérisé en ce que** ledit second élément (M2) peut être choisi dans un groupe comprenant au moins un miroir secondaire et un plan focal.

19. Equipement spatial comportant au moins un ensemble de premier (M1) et second (M2) éléments, **caractérisé en ce qu'**il comprend au moins un dispositif (D) de support dudit ensemble de premier (M1) et second (M2) éléments selon l'une des revendications précédentes.

20. Equipement spatial selon la revendication 19, **caractérisé en ce qu'**il est agencé sous la forme d'un instrument d'observation.

21. Equipement spatial selon la revendication 20, **caractérisé en ce que** ledit instrument d'observation est constitué d'au moins un télescope.

## Claims

1. Device (D) for supporting a first (M1) and a second (M2) element of a piece of space equipment, comprising at least two deployable flexible arms (Oij) each comprising a first end (EX1) and a second end (EX2) which ends may be secured respectively to said first (M1) and second (M2) elements and each designed to adopt at least one initial position folded in curves and one unfolded final position, in which positions they hold the first element (M1) away from the second element (M2) by first and second chosen distances respectively, said second distance being greater than the first distance;
**characterized in that** it comprises three pairs of arms in each of which two of said arms (Oi1, Oi2) constitute two nonparallel sides of a trapezium (Ti) once they have been positioned in their respective final positions.

2. Device (D) for supporting a first (M1) and a second (M2) element of a piece of space equipment, comprising at least two deployable flexible arms (Oij) each comprising a first end (EX1) and a second end (EX2) which ends may be secured respectively to said first (M1) and second (M2) elements and each designed to adopt at least one initial position folded in curves and one unfolded final position, in which positions they hold the first element (M1) away from the second element (M2) by first and second chosen distances respectively, said second distance being greater than the first distance;
**characterized in that** it comprises three pairs of arms in each of which two of said arms (Oi1, Oi2) constitute two sides of a triangle (Ti) once they have been positioned in their respective final positions.

3. Device according to Claim 1, **characterized in that** said arms (Oi1, Oi2) of each pair have identical lengths so the corresponding trapezium (Ti) is of the isosceles type.

4. Device according to Claim 2, **characterized in that** said arms (Oi1, Oi2) of each pair have identical lengths so the corresponding triangle (Ti) is of the isosceles type.

5. Device according to one of Claims 1 to 4, **characterized in that** it comprises a first frame (C1) to which said first element (M1) may be fixed and the first end (EX1) of each arm (Oij) is fixed in such a way as to be secured to said first element (M1), and a second frame (C2) to which said second element (M2) may be fixed and the second end (EX2) of each arm (Oij) is fixed in such a way as to be secured to said second element (M2).

6. Device according to Claim 5, **characterized in that** said first (EX1) and second (EX2) ends of each arm (Oij) are respectively fixed to said first (C1) and second (C2) frames by a mechanical connection and/or an immobilizing material intended to block any degree of freedom of movement.

7. Device according to one of Claims 1 to 6 in combination with one of Claims 5 and 6, **characterized in that** each arm (Oij) comprises a first sub-arm (Oij1) comprising said first end (EX1) and a third end (EX3) and a second sub-arm (Oij2) comprising said second end (EX2) and a fourth end (EX4), and **in that** it comprises a third frame (C3) inserted between said first (C1) and second (C2) frames and to which the third end (EX3) of each first sub-arm (Oij1) and the fourth end (EX4) of each second sub-arm (Oij2) are fixed.

8. Device according to Claim 7, **characterized in that** said third (EX3) and fourth (EX4) ends of each first sub-arm (Oij1) and each second sub-arm (Oij2) are fixed to said third frame (C3) by a mechanical connection and/or an immobilizing material intended to block any degree of freedom of movement.

9. Device according to one of Claims 1 to 8, **characterized in that** it comprises damping means designed to damp the movement of said second element (M2) as each arm (Oij) reaches its final position.

10. Device according to one of Claims 1 to 9, **characterized in that** it comprises guide means designed to guide at least some of the movement of said second element (M2) as each arm (Oij) moves from its initial position towards its final position.

11. Device according to one of Claims 1 to 10, **characterized in that** it comprises movement means designed to move the first end (EX1) and/or the second end (EX2) of at least one of said arms (Oij) in such a way as to control its final position and the position of said second element (M2) with respect to said first element (M1).

12. Device according to one of Claims 1 to 11, **characterized in that** it comprises retractable immobilizing means designed to immobilize said first elements (M1) and/or said second element (M2) with respect to a rigid structure of said piece of equipment while each arm (Oij) is still in its initial position.

13. Device according to one of Claims 1 to 11, **characterized in that** each flexible arm (Oij) is able to tolerate at least two bends in at least one chosen plane while it is in said initial position.

14. Device according to Claim 13, **characterized in that** said flexible arm (Oij, Oij1, Oij2) is able to tolerate at least two bends in one and the same plane while it is in said initial position.

15. Device according to Claim 13, **characterized in that** said flexible arm (Oij, Oij1, Oij2) is able to tolerate at least two bends in at least two different planes while it is in said initial position.

16. Device according to one of Claims 13 to 15, **characterized in that** each flexible arm (Oij, Oij1, Oij2) is made of carbon fiber.

17. Device according to one of Claims 1 to 16, **characterized in that** said first element (M1) may be a primary mirror.

18. Device according to one of Claims 1 to 17, **characterized in that** said second element (M2) may be chosen from a group comprising at least a secondary mirror and a focal plane.

19. Piece of space equipment comprising at least one assembly of a first (M1) and a second (M2) element, **characterized in that** it comprises at least one device (D) for supporting said assembly of first (M1) and second (M2) elements according to one of the preceding claims.

20. Piece of space equipment according to Claim 19, **characterized in that** it is arranged in the form of an observation instrument.

21. Piece of space equipment according to Claim 20, **characterized in that** said observation instrument consists of at least one telescope.

## Patentansprüche

1. Vorrichtung (D) für die Unterstützung eines ersten Elements (M1) und eines zweiten Elements (M2) einer Raumfahrtausrüstung, mit wenigstens zwei entfaltbaren flexiblen Lamellen (Oij), wovon jede ein erstes Ende (EX1) und ein zweites Ende (EX2) besitzt, die mit dem ersten Element (M1) bzw. mit dem zweiten Element (M2) verbunden sein können, und wovon jede in der Weise angeordnet ist, dass sie wenigstens eine Anfangsstellung, in der sie durch Biegungen zusammengefaltet ist, und eine entfaltete Endstellung, in der sie das erste Element (M1) um eine erste bzw. eine zweite ausgewählte Strecke beabstandet von dem zweiten Element (M2) hält, annehmen kann, wobei die zweite Strecke größer ist als die erste Strecke,
**dadurch gekennzeichnet, dass** sie drei Lamellenpaare enthält, wovon in jedem zwei der Lamellen (Oi1, Oi2) zwei nicht parallele Seiten eines Trapezes (Ti) bilden, sobald sie sich in ihren jeweiligen Endstellungen befinden.

2. Vorrichtung (D) für die Unterstützung eines ersten Elements (M1) und eines zweiten Elements (M2) einer Raumfahrtausrüstung, mit wenigstens zwei entfaltbaren flexiblen Lamellen (oil), wovon jede ein erstes Ende (EX1) und ein zweites Ende (EX2) aufweist, die mit dem ersten Element (M1) bzw. mit dem zweiten Element (M2) verbunden sein können, und wovon jede in der Weise angeordnet ist, dass sie wenigstens eine Anfangsstellung, in der sie durch Biegungen zusammengefaltet ist, und eine entfaltete Endstellung, in der sie das erste Element (M1) um eine erste bzw. eine zweite ausgewählte Strecke beabstandet von dem zweiten Element (M2) hält, annehmen kann, wobei die zweite Strecke größer ist als die erste Strecke;
**dadurch gekennzeichnet, dass** sie drei Lamellenpaare enthält, wovon in jedem zwei der Lamellen (Oi1, Oi2) zwei Seiten eines Dreiecks (Ti) bilden, sobald sie sich in ihren jeweiligen Endstellungen befinden.

3. Vorrichtung nach Anspruch 1, **dadurch gekennzeichnet, dass** die Lamellen (Oi1, Oi2) jedes Paars die gleiche Länge haben, derart, dass das entsprechende Trapez (Ti) vom gleichschenkligen Typ ist.

4. Vorrichtung nach Anspruch 2, **dadurch gekennzeichnet, dass** die Lamellen (Oi1, Oi2) jedes Paars die gleiche Länge haben, derart, dass das entsprechende Dreieck (Ti) vom gleichschenkligen Typ ist.

5. Vorrichtung nach einem der Ansprüche 1 bis 4, **dadurch gekennzeichnet, dass** sie einen ersten Rahmen (C1), an dem das erste Element (M1) befestigt werden kann und an dem das erste Ende (EX1) jeder Lamelle (Oij) befestigt ist, derart, dass sie mit dem ersten Element (M1) verbunden ist, und einen zweiten Rahmen (C2), an dem das zweite Element (M2) befestigt werden kann und an dem das zweite Ende (EX2) jeder Lamelle (Oij) befestigt ist, derart, dass sie mit dem zweite Element (M2) verbunden ist, aufweist.

6. Vorrichtung nach Anspruch 5, **dadurch gekennzeichnet, dass** das erste Ende (EX1) und das zweite Ende (EX2) jeder Lamelle (Oij) an dem ersten Rahmen (C1) bzw. an dem zweiten Rahmen (C2) durch eine mechanische Verbindung und/oder ein Blockiermaterial befestigt sind, die dazu bestimmt ist sind, jeden Bewegungsfreiheitsgrad zu blockieren.

7. Vorrichtung nach einem der Ansprüche 1 bis 6 in Kombination mit einem der Ansprüche 5 und 6, **dadurch gekennzeichnet, dass** jede Lamelle (Oij) eine erste Unterlamelle (Oij1), die das erste Ende (EX1) und ein drittes Ende (EX3) besitzt, und eine zweite Unterlamelle (Oij2), die das zweite Ende (EX2) und ein viertes Ende (EX4) besitzt, enthält und dass sie einen dritten Rahmen (C3) aufweist, der zwischen den ersten Rahmen (C1) und den zweiten Rahmen (C2) eingefügt ist und an dem das dritte Ende (EX3) jeder ersten Unterlamelle (Oij1) und das vierte Ende (EX4) jeder zweiten Unterlamelle (Oij2) befestigt sind.

8. Vorrichtung nach Anspruch 7, **dadurch gekennzeichnet, dass** das dritte Ende (EX3) und das vierte Ende (EX4) jeder ersten Unterlamelle (Oij1) und jeder zweiten Unterlamelle (Oij2) an dem dritten Rahmen (C3) über eine mechanische Verbindung und/oder ein Blockiermaterial befestigt sind, die dazu bestimmt sind, jeden Bewegungsfreiheitsgrad zu blockieren.

9. Vorrichtung nach einem der Ansprüche 1 bis 8, **dadurch gekennzeichnet, dass** sie Dämpfungsmittel enthält, die dazu ausgelegt sind, die Verlagerung des zweiten Elements (M2) zu dämpfen, wenn jede Lamelle (Oij) ihre Endstellung einnimmt.

10. Vorrichtung nach einem der Ansprüche 1 bis 9, **dadurch gekennzeichnet, dass** sie Führungsmittel enthält, die dazu ausgelegt sind, wenigstens einen Teil der Verlagerung des zweiten Elements (M2) zu führen, wenn sich jede Lamelle (Oij) aus ihrer Anfangsstellung in ihre Endstellung entwickelt.

11. Vorrichtung nach einem der Ansprüche 1 bis 10, **dadurch gekennzeichnet, dass** sie Verlagerungsmittel enthält, die dazu ausgelegt sind, das erste Ende (EX1) und/oder das zweite Ende (EX2) wenigstens einer der Lamellen (Oij) in der Weise zu verlagern, dass ihre Endstellung und die Positionierung des zweiten Elements (M2) in Bezug auf das erste Element (M1) gesteuert werden.

12. Vorrichtung nach einem der Ansprüche 1 bis 11, **dadurch gekennzeichnet, dass** sie einziehbare Blockiermittel enthält, die dazu ausgelegt sind, das erste Element (M1) und/oder das zweite Element (M2) in Bezug auf eine starre Struktur der Ausrüstung unbeweglich zu machen, solange sich jede Lamelle (Oij) in ihrer Anfangsstellung befindet.

13. Vorrichtung nach einem der Ansprüche 1 bis 11, **dadurch gekennzeichnet, dass** jede flexible Lamelle (Oij) geeignet ist, wenigstens zwei Biegungen in wenigstens einer ausgewählten Ebene zu unterstützen, wenn sie sich in ihrer Anfangsstellung befindet.

14. Vorrichtung nach Anspruch 13, **dadurch gekennzeichnet, dass** die flexible Lamelle (Oij, Oij1, Oij2) geeignet ist, wenigstens zwei Biegungen in derselben Ebene zu unterstützen, wenn sie sich in ihrer Anfangsstellung befindet.

15. Vorrichtung nach Anspruch 13, **dadurch gekennzeichnet, dass** die flexible Lamelle (Oij, Oij1, Oij2) geeignet ist, wenigstens zwei Biegungen in wenigstens zwei verschiedene Ebenen zu unterstützen, wenn sie sich in der Anfangsstellung befindet.

16. Vorrichtung nach einem der Ansprüche 13 bis 15, **dadurch gekennzeichnet, dass** jede flexible Lamelle (Oij, Oij1, Oij2) aus Kohlenstofffasern hergestellt ist.

17. Vorrichtung nach einem der Ansprüche 1 bis 16, **dadurch gekennzeichnet, dass** das erste Element (M1) ein Primärspiegel sein kann.

18. Vorrichtung nach einem der Ansprüche 1 bis 17, **dadurch gekennzeichnet, dass** das zweite Element (M2) aus einer Gruppe ausgewählt sein kann, die wenigstens einen Sekundärspiegel und eine Brennebene enthält.

19. Raumfahrtausrüstung, die wenigstens eine Anordnung aus einem ersten Element (M1) und einem zweiten Elements (M2) enthält, **dadurch gekennzeichnet, dass** sie wenigstens eine Vorrichtung (D) für die Unterstützung des ersten Elements (M1) und des zweiten Elements (M2) nach einem der vorhergehenden Ansprüche enthält.

20. Raumfahrtausrüstung nach Anspruch 19, **dadurch gekennzeichnet, dass** sie in Form eines Beobachtungsinstruments ausgebildet ist.

21. Raumfahrtausrüstung nach Anspruch 20, **dadurch gekennzeichnet, dass** das Beobachtungsinstrument aus wenigstens einem Teleskop gebildet ist.
